# EUROPEAN PATENT APPLICATION

(11) **EP 3 795 511 A1**
(43) Date of publication of application: **24.03.2021**
(21) Application number: 19802831.8
(22) Date of filing: 01.04.2019
(51) Int. Cl.: B65G 63/00, B65G 67/60

(54) **AUTOMATED CONTAINER HANDLING DOCK**

(30) Priority: 16.05.2018 CN 201810470220
(71) Applicant: Qingdao Port International Co., Ltd., Qingdao, Shandong 266000 (CN); Qingdao New Qianwan Container Terminal Co., Ltd., Qingdao, Shandong 266000 (CN)
(72) Inventor: ZHANG, Liangang, Qingdao, Shandong 266500 (CN); YIN, Jian, Qingdao, Shandong 266500 (CN); ZHANG, Wei, Qingdao, Shandong 266500 (CN); LI, Yongcui, Qingdao, Shandong 266500 (CN); LV, Xiangdong, Qingdao, Shandong 266500 (CN); WANG, Wei, Qingdao, Shandong 266500 (CN); WANG, Jisheng, Qingdao, Shandong 266500 (CN); SUN, Xiuliang, Qingdao, Shandong 266500 (CN); TANG, Lihui, Qingdao, Shandong 266500 (CN)
(74) Representative: KIPA AB
(86) International application number: PCT/CN2019/080788
(87) International publication number: WO 2019/218785

(57) **Abstract**

An automated container handling dock, sequentially provided with, from a land side to a sea side, a gate, a container stack yard (300), an intra-yard transport vehicle operating area (400), and an overhead crane operating area (500). The container stack yard (300) is arranged in a direction perpendicular to the shoreline (600). A side of the stack yard adjacent to the shoreline (600) is provided with a sea-side exchange area (330), and a side away from the shoreline (600) is provided with a land-side exchange area (310). The invention completely separates the path of an off-yard transport vehicle from the path of an intra-yard transport vehicle, and avoids issues such as traffic congestion in a yard and a forced interruption of an operation process due to path intersection of the two types of vehicles. In addition, a back-end system automatically controls a track crane and the intra-yard transport vehicle to perform container handling operations and ship loading and unloading operations, thereby improving the overall operation efficiency of a dock, reducing error rates, and improving the intelligence level of a container dock.

## Description

### Technical field

The invention belongs to the technical field of dock construction, and particularly relates to a dock design for loading and unloading containers.

### Background

Container yard, also called yard, is a unified gathering place for containers before they are cleared on board. It is used for the loading, unloading, transshipment, storage and delivery of heavy or empty containers, thereby playing a very important role in container transportation. There are a huge number of containers stored in those large container terminals, so in order to facilitate access and management the container yard needs to be divided into multiple independent sub yards and each of the sub yards is provided with a crane to stack, pick and store containers.

The layout of those independent sub yards in typical container terminals are in a direction parallel to the coastline, that is to say, each of the sub yards is parallel to the coastline lengthways. That arrangement means a route which approaching transport vehicles responsible for the collection and storage of containers travel regularly and a route which departing transport vehicles responsible for the loading and unloading of containers travel regularly are intersecting when picking up containers from the yard or storing containers in the yard, which is likely to cause traffic jams and further interrupts overall operation flow and reduce their efficiency.

In addition, approaching transport vehicles have to first go through a dock gate to obtain relevant information such as the number of destination sub yard and the stacking location of the container to be loaded or unloaded when entering into those container yards to pick up containers from there or store containers into. Most of the information is recorded on paper tickets which are handed out by the dock stuff to the drivers at the dock gate. For example, the driver of the approaching transport vehicle drives to the designated sub yard according to the information on the paper tickets; the crane driver of the designated sub yard lifts the target container from the designated location according to the paper ticket and transports it onto the approaching transport vehicle to complete a container pick-up process, or the crane driver of the designated sub yard lifts the target container from the approaching transport vehicle and transports it to the designated location to complete a container storage process. It is a manual operation with disadvantages of being inefficient, error-prone, and potentially hazardous in safety.

### Summary

The invention adopts a new layout design for a container handling dock which completely separates the path where those off-field transport vehicles drive through and the path where those in-field transport vehicles drive through. This arrangement could not only improve the operating efficiency, but also realize an automatic control of container pick-up operation, container storage operation, loading operation and unloading operation.

To solve the above technical problems, the present invention is implemented by using the following technical solutions:
An automated container handling dock, along a direction from a land side to a sea side, is provided sequentially: gates which include an entrance gate configured to verify the legitimacy of an approaching transport vehicle and container thereon and provide a driver of the approaching transport vehicle with a destination container yard area to which the approaching transport vehicle needs to drive, and an exit gate configured to verify the legitimacy of a departing transport vehicle and container thereon and allow the departing transport vehicle to leave or prohibit the departing transport vehicle from leaving according to a verification result; a container yard which includes a plurality of sub yards arranged parallel to each other, wherein each sub yard is arranged perpendicular to a coastline and includes three areas: a land-side interaction area, a stacking operation area and a sea-side interaction area from the land side to the sea side; a crane independently operated is provided in each sub yard, which is configured to interact with the approaching transport vehicle entering into the container yard at the land-side interaction area for automatically performing a container pick-up operation or a container storage operation according to a stacking location of an object container that requires to be transferred by the approaching transport vehicle, to automatically stack the object container at the stacking operation area, and to interact with an in-field transport vehicle at the sea-side interaction area for automatically performing a load operation on board or an unload operation from a ship according to a stacking location of an object container that requires to be loaded on board or unloaded from a ship; an in-field transport vehicle operation area which is provided with a positioning device configured to locate an in-field transport vehicle which receives a driving route generated by a backend system according to a docking position of a ship to be loaded or unloaded and a stacking location of an object container that requires to be loaded on board or unloaded from a ship; and a crane operation area in which a plurality of cranes are sequentially arranged along a direction of a coastline which are configured to lift and place a container transferred by an in-field transport vehicle in a ship in a load operation or lift a container from a ship and place the lifted container to an in-field transport vehicle.

As a preferred design of the land-side interaction area, in the land-side interaction area is provided with one or more lanes for parking off-field transport vehicles, wherein an interactive pavilion is provided on one side of each lane; the interactive pavilion is provided with a card reader configured to read an electronic license plate number from an electronic license plate presented by a driver of an off-field transport vehicle and send the electronic license plate number to the backend system to retrieve a container stacking location corresponding to the electronic license plate number; the container stacking location is sent to a crane in a sub yard to enable the crane to perform a container pick-up operation or a container storage operation.

As a preferred design of the sea-side interaction area, in the sea-side interaction area is provided with one or more bracket interactive lanes for supporting a container; when the backend system performs a loading operation process, a bracket location is sent to a crane and an in-field transport vehicle to instruct the crane to lift a object container to be loaded and place the object container to brackets corresponding to the bracket location and to instruct the in-field transport vehicle to pick up the object container at the bracket location to perform a load operation on board; when the backend system performs an unloading operation from a ship, a bracket location is sent to crane and an in-field transport vehicle to instruct the in-field transport vehicle to place a object container unloaded from a ship at brackets corresponding to the bracket location and instruct the crane to lift the object container from the brackets to perform an unloading operation from a ship.

In order to improve the operation efficiency, in each sub yard is provided with two cranes capable of moving and reciprocating along a direction perpendicular to the coastline: a land-side crane close to the land-side interaction area and a sea-side crane close to the sea-side interaction area; wherein the land-side crane works between the land-side interaction area and the stacking operation area and is configured to cooperate with off-field transport vehicles to perform a container pick-up operation or a container storage operation, and the sea-side crane works between the sea-side interaction area and the stacking operation area and is configured to cooperate with in-field transport vehicles to perform a loading operation on board or an unloading operation from a ship.

In order to avoid that the entire terminal operation is interrupted by the failure of one crane to reduce the operation efficiency of the terminal, the land-side crane and the sea-side crane moves along a same track extending from an outer end of the land-side interaction area to an outer end of the sea-side interaction area, wherein the outer end of the land-side interaction area is an end of the land-side interaction area away from the stacking operation area and the outer end of the sea-side interaction area is an end of the sea-side interaction area away from the stacking operation area; when the land-side crane fails, the land-side crane is docked at the outer end of the land-side interaction area and the sea-side crane is controlled by the backend system to move through a sub yard to perform a full-field operation; when the sea-side crane fails, the sea-side crane is docked at the outer end of the sea-side interaction area and the land-side crane is controlled by the backend system to move through a sub yard to perform a full-field operation.

In order to protect the personal safety of the driver of the off-field transport vehicle, inside the interactive pavilion is provided with a start-stop button without holding function; when the start-stop button being pressed, the land-side crane first enters into the land-side interaction area from the stacking operation area to pick up an container from an off-field transport vehicle or place an container picked up from the stacking operation area on an off-field transport vehicle and then returns to the stacking operation area; during an interaction operation of the land-side crane at the land-side interaction area, if the start-stop button is bounced up, the land-side crane stops in place to avoid working land-side crane hurts the drive who gets out of the interactive pavilion and enters into the land-side interaction area.

In order to realize the automatic control of both of the container pickup and container storage operation, as receiving the electronic license plate number loaded by a card reader in an interactive pavilion, the backend system first verifies whether a sub yard where the interactive pavilion is located is same as a sub yard corresponding to the electronic license plate number received; if the sub yards are not consistent, the backend system sends an error message to the interactive pavilion giving a feedback to the driver of the off-field transport vehicle by displaying the error message on a screen in the interactive pavilion; if the sub yards are consistent, the backend system retrieves the type of an operation and the stacking location of the object container in the stacking operation area which are sent to the land-side crane; if the land-side crane receives a container pick-up operation task, the land-side crane picks up the object container from the stacking operation area according to the stacking location and moves to a boundary area between the land-side interaction area and the stacking operation area to wait for the start-stop button being pressed; once the start-stop button being pressed, the land-side crane enters into the land-side interaction area and places the pick-up object container on the off-field transport vehicle to complete a container pick-up operation; if the land-side crane receives a container storage operation task, the land-side crane moves to the boundary area between land-side interaction area and the stacking operation area with an empty hoist to wait for the start-stop button being pressed; once the start-stop button being pressed, the land-side crane first enters into the land-side interaction area and picks up the object container from the off-field transport vehicle, and then returns to the stacking operation area and places the object container at the stacking location in the stacking operation area to complete a container storage operation.

Further, when the backend system performing a loading operation on board, the backend system is required firstly to send the stacking location of the object container to be loaded on board in the stacking operation area and a bracket location where the object container to be placed in the sea-side interaction area to the sea-side crane; if the sea-side crane receives a loading operation task, the sea-side crane picks up the object container from the stacking operation area according to the stacking location and moves to the sea-side interaction area and places the object container on the brackets corresponding to the bracket location; the backend system then sends the bracket location and a dock position of a ship to an in-field transport vehicle and instruct the in-field transport vehicle to pick up the object container at the bracket location and transfer the object container to a crane corresponding to the dock position of the ship, the crane corresponding to the dock position of the ship performs loading; when the backend system performing an unloading operation from a ship, the backend system is required firstly to send a dock position of a ship to be unloaded and a bracket location where the unloaded object container to be placed in the sea-side interaction area to an in-field transport vehicle and instruct the in-field transport vehicle to transfer the object container unloaded by a crane to brackets corresponding to the bracket location; the backend system then sends the bracket location and a stacking location of the object container in the stacking operation area to the sea-side crane; when the sea-side crane receiving an unload operation task, the sea-side crane moves to the bracket location in the sea-side interaction area with an empty hoist and picks up the object container on the brackets and transfer the object container to the stacking operation area and places the object container on the stack location to complete an unloading operation.

In order to ensure that the in-field transport vehicle could work continuously for a long time, a charging sliding contact line is provided on the brackets and a charging trolley is arranged on the in-field transport vehicle; wherein the charging trolley is provided with a charging carbon brush; when the in-field transport vehicle enters into the sea-side interaction area, the charging carbon brush is controlled to extend out and contact with the charging sliding contact line to charge the in-field transport vehicle.

Further, a winding machine configured to lift or lower the hoist is installed on one side of a main frame of each crane protruding outside from the main frame with a protruding height of d; any two sub yards adjacent to each other consisting of one group, wherein the distance between the two sub yards in each group is smaller than the width of a single lane and a traffic lane with a width greater than 2d is formed between two adjacent groups allowing a maintenance vehicle to drive through; the winding machine is installed on one side of a main frame of the crane close to the traffic lane; for the two sub yards located at an outermost side of the container yard, the winding machines are installed on the side of the main frames of the cranes facing the periphery of the container yard. Therefore, while leaving installation space for the winding machine, a maintenance lane could be formed together to realize a reasonable use of space.

As a preferred design of the departing transport vehicle operation area, the positioning device preferably comprises one or more magnetic nails distributed on the ground of the in-field transport vehicle operation area; wherein each magnetic nail has an independent serial number and the in-field transport vehicle is a horizontal automatic guided vehicle on which a radar scanning board is arranged; while the horizontal automatic guided vehicle runs in the in-field transport vehicle operation area, the magnetic nails on the ground are scanned by the radar scanning board to obtain the serial number of each magnetic nail which is sent to the backend system for the calculation of the physical position of the horizontal automatic guided vehicle, and a driving route of the horizontal automatic guided vehicle is generated to navigate the operation of the horizontal automatic guided vehicle.

Compared with the prior art, the advantages and positive effects of the present invention are: an automated container handling dock of the present invention is designed to arrange the container yard in a direction perpendicular to the coastline, and is provided with a sea-side interaction area on the side adjacent to the coastline and a land-side interaction area away from the coastline, and therefore the path where those off-field transport vehicles drive through and the path where those in-field transport vehicles drive through could be completely separated from each other to avoid traffic congestion or forced interruption of work processes caused by crossing routes of the two type vehicles. In addition, the backend system of the present invention is designed to automatically control the crane and the in-field transport vehicles to perform the container pick-up operation, the container storage operation, the loading operation and the unloading operation, thereby improving the overall operating efficiency of the terminal, reducing the error rate, and significantly improving the intelligent level of the container terminal.

### BRIEF DESCRIPTION OF THE DRAWINGS

Fig. 1 is an overall layout diagram showing an automated container handling dock according to the present invention;
Fig.2 is a schematic diagram showing a first entrance station gate and a first exit station gate of Fig.1.
Fig.3 is a flowchart showing an information collection process of a first entrance station gate;
Fig.4 is a schematic diagram showing a second entrance station gate and a second exit station gate of Fig. 1;
Fig.5 is a flowchart showing an information collection process of a second entrance station gate;
Fig.6 is a schematic diagram showing a third entrance station gate and a third exit station gate of Fig. 1;
Fig.7 is a flowchart showing an information collection process of a third entrance station gate;
Fig. 8 is a partial construction diagram of an embodiment of the container yard in Fig. 1;
Fig. 9 is a schematic diagram of an embodiment of a land-side interaction area of a container yard;
Fig. 10 is a schematic diagram of an embodiment of a sea-side interaction area of a container yard.

### Detailed Description

The specific embodiments of the present invention will be further described in detail below with reference to the accompanying drawings.

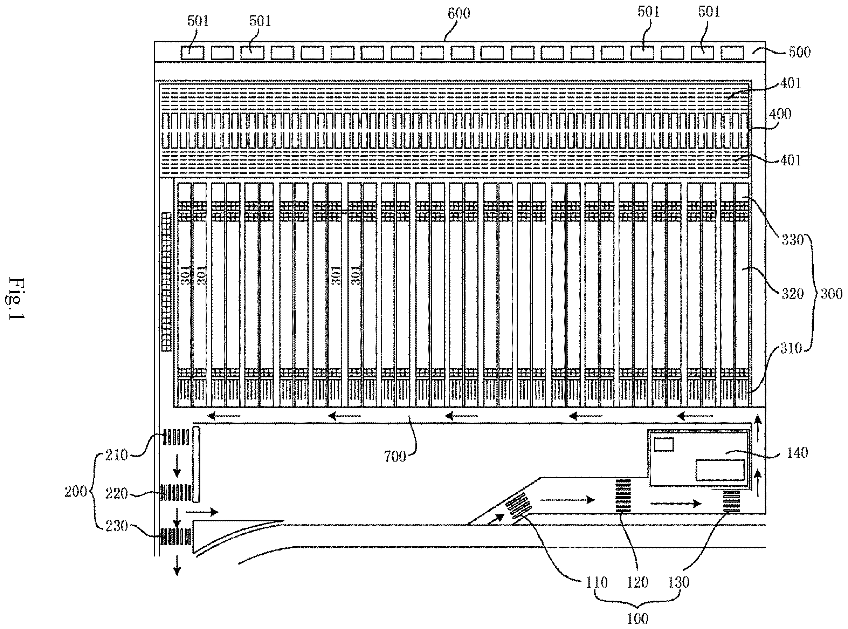

In order to further develop intelligent container terminals and realize a completely automatic control of pick-up, storage, loading and unloading operations of container, in an embodiment of the present invention four functional areas are arranged in a container terminal: terminal gates, a container yard 300, an in-field transport vehicle operation area 400, and a crane operation area 500, which is shown in Fig.1.

The terminal gates serve as the entrance and exit portals of the container terminal, which are configured to determine whether or not to allow an approaching transport vehicle to enter into or to give a departing transport vehicle permission to leave the container yard. To be specific, the terminal gates include an entrance gate 100 and an exit gate 200, wherein the entrance gate 100 is the entrance of the container terminal where the legitimacy of each approaching transport vehicle and container thereon are verified to prevent suspicious items from entering into the container terminal to bring in safety risks. From the entrance gate 100, drivers of verified approaching transport vehicles obtain their destination yard areas and goes to the place to fulfill a container pick-up operation or a container storage operation. The exit gate 200 is the exit of the container terminal where the legitimacy of each departing transport vehicle and container thereon are verified to decide whether or not to give a permission to them to leave. Those ones failed verification are prohibited from leaving the container terminal, with which only verified departing transport vehicles could leave so the storage safety of the yard could be ensured.

In order to solve the problem of low traffic efficiency and congestion of the one-stop gate of the prior art, a three-stop gate is provided in the present embodiment, as shown in Fig.1, both of the entrance gate 100 and the exit gate 200 could be designed as having three station gates: a first station gate, a second station gate and a third station gate which are sequentially defined according to a driving direction of vehicles driving through. For the sake of clarity, the entrance gate 100 has a first entrance station gate 110, a second entrance station gate 120 and a third entrance station gate 130; and the exit gate 200 has a first exit station gate 210, a second exit station gate 220 and a third exit station gate 230. Those station gates are independent with each other and respectively responsible for collecting and dealing with different information.

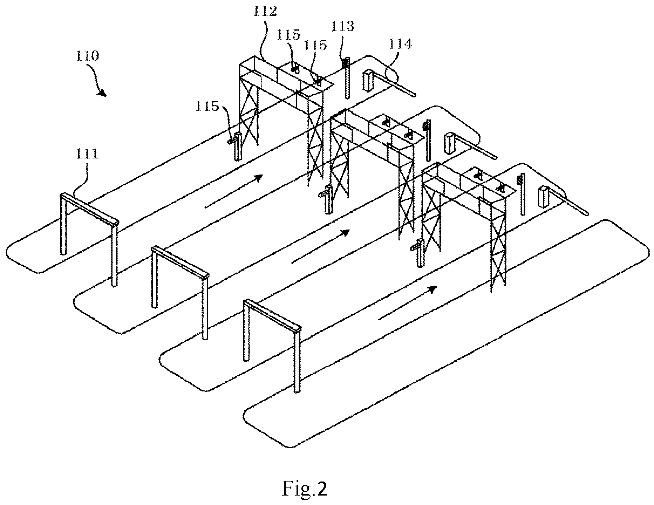

With reference to Fig. 2 to Fig. 7, the specific structural design of each station gate and its work flow will be described in detail as follows.

In the present embodiment, the first entrance station gate 110 and the first exit station gate 210 can be constructed with a same or a substantially same structural design, wherein the first entrance station gate 110 is responsible for collecting the information of an approaching transport vehicle including physical vehicle license plate number, serial number of container thereon, container type and the number of containers and the first exit station gate 210 is responsible for collecting the information of a departing transport vehicle including physical vehicle license plate number, serial number of container thereon, container type and the number of containers. The information collected is sent to a backend system to retrieve corresponding information stored in the backend system. That means corresponding information of those approaching transport vehicles and containers thereon was stored in the backend system of the container terminal before an off-field transport vehicle drives to the entrance gate 100 or the exit gate 200. The entrance gate 100 is configured to determine whether the information of an approaching transport vehicle and containers thereon are identical with corresponding information stored in the backend system so that those suspicious off-field transport vehicles could be blocked from entering into the container yard 300. The exit gate 200 is configured to determine whether the information of a departing transport vehicle and containers thereon are identical with corresponding information stored in the backend system so that those suspicious off-field transport vehicles could be blocked from leaving the container yard 300.

The present embodiment is described by taking the first entrance station gate 110 as an example, as shown in Fig. 2.

In the present embodiment, in order to improve the traffic capacity, it is preferable to arrange a plurality of parallel crossings at the first entrance station gate 110 so that multiple approaching transport vehicles could pass thereby simultaneously. Each crossing at the first entrance station gate 110 is respectively provided with a vehicle sensor door 111, a height-limiting and width-limiting door 112, a signal light 113, an electronic barrier 114 and an information acquisition device 115. The vehicle sensor door 111 is configured to determine whether a vehicle enters into the first entrance station gate 110. With this arrangement, the information acquisition device 115 and sensors on the height-limiting and width-limiting door 112 could be activated only when detecting a vehicle enters into the first entrance station gate 110 to reduce system power consumption. The height-limiting and width-limiting door 112 sets a height limit and a width limit on a container carried by the vehicle, so as to prevent over-height or over-width vehicles from entering into. The signal light 113 is used to indicate whether the vehicle is allowed to pass which is red by default meaning that the vehicle is prevented from passing through. The electronic barrier 114 is preferably disposed behind the height-limiting and width-limiting door 112 which is a falling rod by default to prevent those vehicles that information is not completely collected or those over-height or over-width vehicles from entering into. The information acquisition device 115 disposed on the first entrance station gate 110 is configured to obtain information including physical vehicle license plate number, serial number of container thereon, container type, the number of containers, the location of the container on a pallet, the door orientation of the container, whether or not the container has some breakages and the like and send those information collected to the backend system. According to the collected physical vehicle license plate number or the serial number of container thereon, the backend system retrieves a relevant information list corresponding to the vehicle and compares the items such as: physical vehicle license plate number, serial number of container thereon, container type, the number of containers and the like with those collected; furthermore, the collected information such as the location of the container on a pallet, the door orientation of the container and whether the container has some breakages is added into the information list.

In the present embodiment, it is preferable to use a combination of gate camera photography and background image recognition to complete the information collection of the vehicles and containers thereon as entering into the container terminal. That is to say, in the present embodiment, cameras are used as the information acquisition device 115, which are installed at the first entrance station gate 110, preferably on the height-limiting and width-limiting door 112 of each crossing, which take photographs of the vehicles and containers thereon as they entering into the entrance from multiple angles and send the photos to the backend system for extracting the information including the physical vehicle license plate number, the serial number of container thereon, container type, the number of containers, the location of the container on a pallet, the door orientation of the container, whether the container has some breakages and the like by image recognition technology known in the prior art for further verification of vehicles and containers thereon.

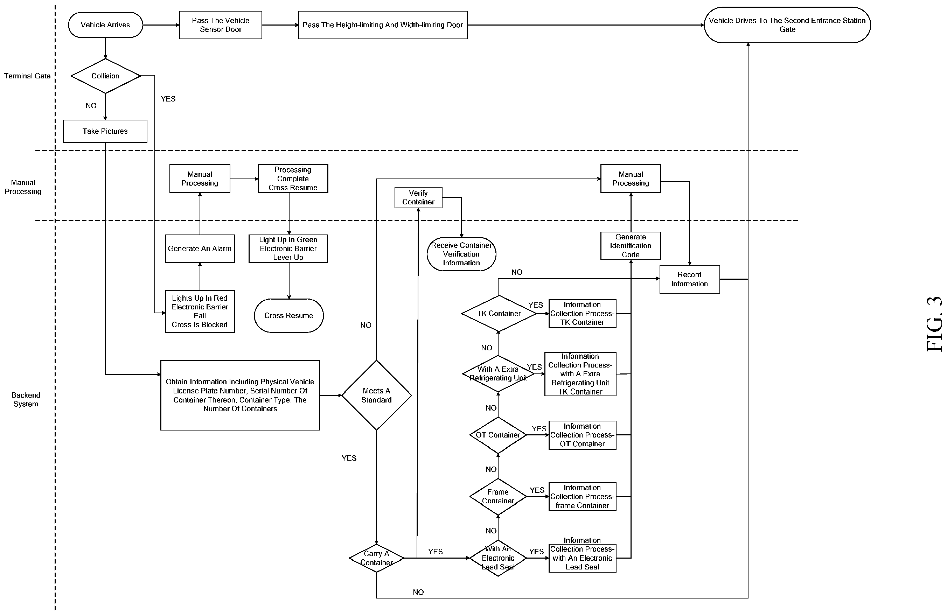

The operation flow of the first entrance station gate 110 will be described in detail with reference to Fig. 3.

When an off-field transport vehicle (the off-field transport vehicle could be either an empty car ready for carrying a container or a heavy vehicle carrying a container ready for unloading the container in the container terminal) arrives at the container terminal, it must first pass through the first entrance station gate 110.

When the vehicle sensor door 111 in the first entrance station gate 110 sensing a vehicle is passing through, the camera 115 and sensors on the height-limiting and width-limiting door 112 are powered on. The camera 115 takes pictures of the vehicle driving through and a container thereon (only for a heavy vehicle), and sends the taken pictures to the backend system in a timely manner.

If the off-field transport vehicle collides with the height-limiting and width-limiting door 112 as passing through, the vehicle is determined as abnormal and an over-limit warning signal is generated and sent to the backend system, and the signal light 113 is turned on in red. The electronic barrier 114 falls and blocks the vehicle from passing through. At the same time, the sensors on the height-limiting and width-limiting door 112 send an alarm to notify the operator to deal with the vehicle personally. After the manual process, the electronic barrier 114 could be manually controlled to lever up and the signal light 113 lights up in green, and the crossing is resumed.

If the off-field transport vehicle does not collide when passing the height-limit and width-limit door 112, the backend system performs image recognition on the basis of photos uploaded by the camera 115 and extracts information including the physical vehicle license plate number, the serial number of container thereon, container type, the number of containers, the location of the container on a pallet, the door orientation of the container, whether the container has some breakages and the like. If the extracted information does not meet a standard, the operator could enter into the missing part manually; if the extracted information meets the standard, the backend system automatically determines whether the off-field transport vehicle carries a container; if the off-field transport vehicle does not carry a container, no further information should be supplemented; if the off-field transport vehicle carries a container, the backend system first determines whether the container belongs to a conventional type; if it is a conventional container, the backend system automatically supplements missing information; if the container carried by the off-field transport vehicle belongs to a special type, such as a container with an electronic lead seal, a frame container, a OT container, a container with a extra refrigerating unit, a TK container and the like, performing an information collection process corresponding to the type of the container and waiting for operator to manually supplement relevant information.

Once the information collection is completed, the electronic barrier 114 levers up automatically, the signal light 113 lights up in green, and the vehicle is allowed to pass through.

During a period when the off-field transport vehicle drives from the first entrance station gate 110 to the second entrance station gate 120, according to the collected physical vehicle license plate number or the serial number of container thereon, the backend system retrieves a stored relevant information list corresponding to the vehicle and compares the items such as: physical vehicle license plate number, serial number of container thereon, container type, the number of containers and the like with those collected; if all of the items match, the backend system further determines whether the container has some breakages; if the container is intact, the off-field transport vehicle could be regarded as passing a preliminary verification (a first station verification), and the collected information such as the location of the container on a pallet, the door orientation of the container could be added into the stored relevant information list corresponding to the vehicle; if the container is damaged or any of the items are not match, it is determined that the off-field transport vehicle is abnormal and its preliminary verification is finished. The abnormal off-field transport vehicle is guided to a buffer zone for further manual inspection as driving to the second entrance station gate 120.

In the present embodiment, in order to minimize the time for the vehicle to pass through the gate, it is preferable to set a distance D between the first entrance station gate 110 and the second entrance station gate 120 satisfying D ≧ S ^{∗} T, wherein S is a maximum allowed speed of the vehicle driving between the first entrance station gate 110 and the second entrance station gate 120, and in the present embodiment, it is preferably set S to 30 km / h; T is a time that the backend system required to complete the first station verification according to the information collected at the first entrance station gate 110. With this arrangement, the backend system could make full use of the time period when the vehicle drives from the first entrance station gate 110 to the second entrance station gate 120 to complete data comparison and verification based on the collected information. When the vehicle reaches the second entrance station gate 120, the first station verification result has been generated, which could shorten the waiting time of the vehicle at the second entrance station gate 120.

In the present embodiment, the structure and information collection processing flow of the first exit station gate 210 are same as those of the first entrance station gate 110. To be specific, each of the crossings at the first exit station gate 210 could also be provided with components including a vehicle sensor door, a height-limiting and width-limiting door, a signal light, an electronic barrier and an information acquisition device to complete information collection of a departing transport vehicle and a container thereon. Practically there may have slight differences in the information collection processing process between the first entrance station gate 110 and the first exit station gate 210. For example, at the first exit station gate 210 merely the physical vehicle license plate number of departing transport vehicle, serial number of container thereon, container type and the number of containers are collected and sent to the backend system for a preliminary verification, no need to collect the location of the container on a pallet, the door orientation of the container and whether the container has some breakages, thereby further improving the efficiency for access at the exit gate 200.

For the same reason, it is preferable to set a distance D between the first exit station gate 210 and the second exit station gate 220 satisfying D ≧ S ^{*} T. With this arrangement, the backend system could make full use of the time period during which the vehicle is driving from the first exit station gate 210 to the second exit station gate 220 to complete data comparison and verification based on the collected information. When the vehicle reaches the second exit station gate 220, the first station verification result has been generated, thereby reducing the waiting time of the vehicle at the second exit station gate 220.

In the present embodiment, the second entrance station gate 120 and the second exit station gate 220 can also be constructed with a same or a substantially same structural design, wherein the second entrance station gate 120 is responsible for collecting the information of an approaching transport vehicle such as electronic license plate number, driver's identity information and vehicle weight, and the second exit station gate 220 is responsible for collecting the information of a departing transport vehicle such as electronic license plate number, driver's identity information and vehicle weight. The information collected is sent to the backend system. The backend system uses the retrieved relevant information list corresponding to the vehicle which is obtained during the processing at the first station gates to verify legality of the vehicle and the driver, and to determine if there is any abnormality of the weight of the container thereon with reference to a container weight information recorded in the relevant information list. The backend system generates destination information on the basis of the verification result which is sent to the second entrance station gate 120 or the second exit station gate 220 to guide the driver where to go.

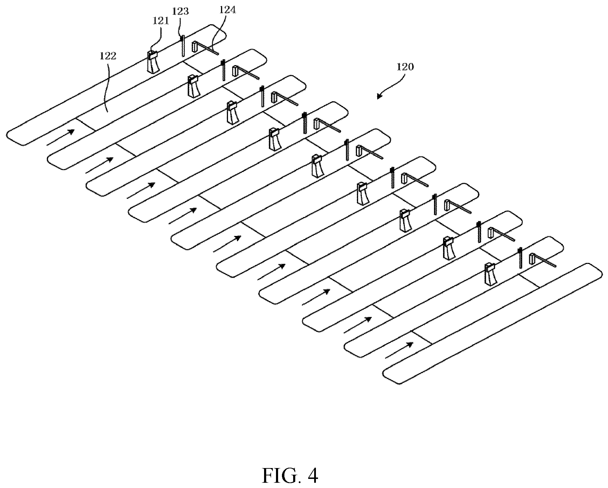

The present embodiment is described by taking the second entrance station gate 120 as an example, as shown in Fig.4.

In the present embodiment, in order to improve the traffic capacity, it is preferable to arrange a plurality of parallel crossings at the second entrance station gate 120 so that multiple off-field transport vehicles could pass thereby simultaneously. Each crossing at the second entrance station gate 120 is respectively provided with a card reader 121 (such as an RFID card reader or/and an ID card reader), a floor scale 122, a signal light 123, and an electronic barrier 124; wherein the RFID card reader and the ID card reader 121 are installed on a carrier and respectively used to gather an electronic license plate number and driver's identity information. The floor scale 122 is installed on a road surface at each crossing and used to sense the weight of the vehicle as entering the gate for further determination whether the vehicle is an empty vehicle or a heavy vehicle. If it is a heavy vehicle which is carrying a container, the weight of the container is calculated for further comparison on the basis of a vehicle weight detected. The signal light 123 is used to indicate whether the vehicle is allowed to pass which is red by default meaning that the vehicle is prevented from passing through. The electronic barrier 124 is a falling rod by default and levers up only if the backend system feedbacks the destination information and allows the vehicle to pass.

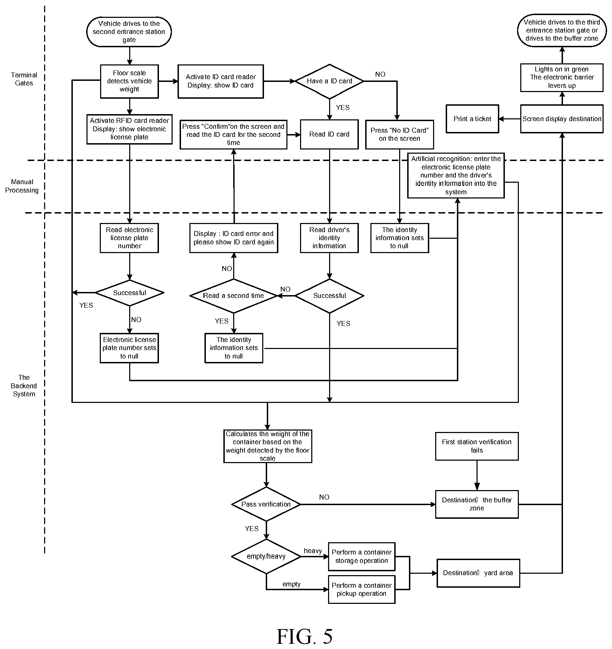

The operation flow of the second entrance station gate 120 will be described in detail with reference to Fig. 5.

When an off-field transport vehicle passes through the first entrance station gate 110 and reaches the second entrance station gate 120, the vehicle stops at the floor scale 122. The RFID card reader and the ID card reader 121 are provided at one side of the floor scale 122. The driver is being instructed to show the electronic license plate and the ID card and approach them to the RFID card reader and the ID card reader 121 respectively, the electronic license plate number and driver's identity information could be read and uploaded to the backend system.

The driver follows on-screen instructions to approach the ID card to the ID card reader 121 for reading. The driver is given two chances for the system to read the ID card. If neither of them is successful, the identity information is set to null. Those drivers who do not own an ID card also follow on-screen instructions to enter "No ID Card" and the identity information is set to null.

Similarly, an RFID card reader is used to gather an electronic license plate number written in the electronic license plate. If the collection fails, the electronic license plate number is set to null.

If the identity information or the electronic license plate number sets to null and the result is received by the backend system, the operator at the second entrance station gate 120 is required to manually identify the electronic license plate number and the driver's identity information of the vehicle and then enter it into the backend system.

When the collection of the electronic license plate number and the driver's identity information is completed, the backend system further calculates the weight of the container based on the weight detected by the floor scale 122, and compares those items including the electronic license plate number, the driver's identity information, and container weight with those in the stored relevant information list retrieved previously corresponding to the vehicle; if all of those items match, the vehicle passes the verification; if either of them does not match, the vehicle fails the verification. In the present embodiment, if the vehicle does not pass the first station verification at t the first entrance station gate 110, it is determined as a problem vehicle regardless of whether or not pass the verification at the second entrance station gate 120 and generates a failed verification final result.

For those problem vehicles that fail the verification, the backend system sets the destination information as "the buffer zone" and sends it to the second entrance station gate 120 which will be displayed on a screen arranged at the second entrance station gate 120, and the "the buffer zone" destination information is also printed out on a ticket with the words "the buffer zone" by a printer arranged at the second entrance station gate 120. The ticket is provided to the driver for guidance to the buffer zone and the vehicle should wait there for manual processing.

For authentic vehicles that pass the verification, the backend system enables part of them to enter into a container storage verification process and the other part to enter into a container pickup verification process based on whether the vehicle is an empty one or a heavy one. Specifically, if the vehicle entering the entrance gate 100 is empty, the container pickup verification process is being performed: retrieving a yard area where an object container is in the container terminal and instructing the driver to go to the yard area and pick up the object container; if the vehicle entering the entrance gate 100 is heavy, the container collection verification process is being performed: retrieving a yard area where an object container carried should be placed in the container yard 300, instructing the driver to go to the yard area so that the object container could be lift by a crane within the yard area and put in the designated position (a stacking location) in the container yard 300.

The yard area retrieved (the number of the sub yard) is used as the destination information by the backend system and sent to the second entrance station gate 120, which is displayed on the screen and also be printed out on a ticket with the words "yard area *** " by the printer. The ticket is provided to the driver for guidance to which sub yard to drive the vehicle to.

Alternatively, the backend system also could send the destination information directly to the driver's mobile phone to indicate the destination. The driver's mobile phone number could be gathered as collecting the driver's identity information.

When the driver obtains the destination information, the signal light 123 lights up in green and the electronic barrier 124 automatically levers up to allow the vehicle to pass.

In the present embodiment, the structure and information collection processing flow of the second exit station gate 220 are same as those of the second entrance station gate 120. To be specific, each of the crossings at the second exit station gate 220 could also be provided with components including card readers, a floor scale, a signal light and an electronic barrier. Practically there may have slight differences in the information collection and processing process between the second exit station gate 220 and the second entrance station gate 120. For example, the backend system determines whether the vehicle is empty or heavy according to the weight collected by the floor scale. If it is a heavy vehicle, it further calculates the weight of the container and compares it with the container weight data in the saved relevant information list. The word "pass" is generated to guide the driver to drive to the third exit station gate 230 if the vehicle passes the verification and the word "the buffer zone" is generated to guide the driver to drive to the buffer zone waiting for manual processing if the vehicle fails the verification.

In the present embodiment, the buffer zone 140 where those problem vehicles park is provided between the second entrance station gate 120 and the third entrance station gate 130. As shown in Fig.1, the buffer zone 140 is set at an area that deviates from a main carriageway between the second entrance station gate 120 and the third entrance station gate 130. Similarly, the buffer zone 140 is also offset from a main carriageway between the second exit station gate 220 and the third exit station gate 230, and therefore those problem departing transport vehicles also could drive to the buffer zone 140. A manual service station could be set up in the buffer zone 140 and the problem vehicles could receive manual processing in the buffer zone 140. Vehicles that the problem is eliminated manually could pass through the third station gates and the rest is not allowed to enter into or leave the container terminal to improve the safety of the container terminal.

In the present embodiment, the third entrance station gate 130 and the third exit station gate 230 can be constructed with same or a substantially same structural design, which are responsible for permitting those verified vehicles to pass through or blocking those vehicles failed verification.

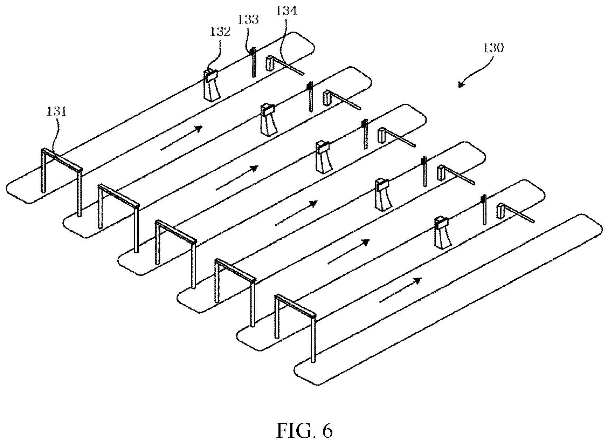

The present embodiment is described by taking the third entrance station gate 130 as an example, as shown in Fig. 6.

In the present embodiment, in order to improve the traffic capacity, it is preferable to arrange a plurality of parallel crossing at the third entrance station gate 130 so that multiple off-field transport vehicles could pass thereby simultaneously. Each crossing at the third entrance station gate 130 is respectively provided with an RFID card reader 132, a signal light 133 and an electronic barrier 134. A vehicle sensor door 131 can be selectively provided.

When a vehicle enters the third entrance station gate 130, it first passes the vehicle sensor door 131. When the vehicle induction door 131 senses a vehicle is passing through, the RFID card reader 132 is activated to collect electronic license plate information. The signal light 133 is used to indicate whether the vehicle is allowed to pass which is red by default meaning that the vehicle is prevented from passing through. The electronic barrier 134 is a falling rod by default and levers up only when the backend system feedbacks the access instruction (for the third entrance station gate 130) or the release command (the third exit station gate 230) to allow the vehicle to pass.

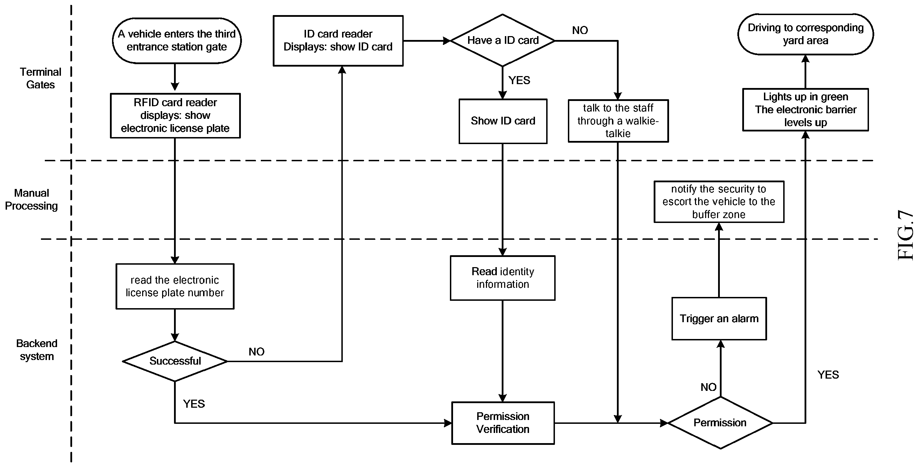

The operation flow of the third entrance station gate 130 will be described in detail with reference to Fig. 7.

When a vehicle enters the third entrance station gate 130, the driver is required to present the electronic license plate and approaching it the RFID card reader 132 to read the electronic license plate number of the vehicle, which is sent to the backend system to retrieve an allow-in command or a denied command with regard to the vehicle.

Practically an identity card reader and a walkie-talkie are preferably provided at the third entrance station gate 130 at the same time. If the RFID card reader 132 fails, the driver may be required to show the ID card and approaching it to the ID card reader for collecting the driver's identity information, which is sent it to the backend system to retrieve an allow-in command or a denied command with regard to the vehicle. If the driver does not have an ID card, he can talk to the staff through the walkie-talkie to confirm whether the vehicle is allowed to enter. If an access is permitted, the electronic barrier 134 manually levers up to release the vehicle; if it is prohibited, an alarm is triggered to notify the security to escort the vehicle to the buffer zone 140.

If the backend system retrieves a verification result of the vehicle based on the collected electronic license plate number or the driver's identity information as "permission", it sends an allow-in command to the third entrance station gate 130; if a verification result of the vehicle retrieved is "prohibition", a denied command is sent to the third entrance station gate 130.

When the allow-in command is received at the third entrance station gate 130, the signal light 133 lights up in green and the electronic barrier 134 levers up to allow the vehicle to drive into the container yard 300. When the denied command is received, the signal light 133 lights up in red and the electronic barrier 134 keeps in a falling state to prohibited the vehicle from entering the container yard 300; in the meanwhile an alarm is activated to notify the security to escort the vehicle to the buffer zone 140 waiting for further manual processing.

In the present embodiment, the structure and information collection processing flow of the third exit station gate 230 are same as those of the third entrance station gate 130. To be specific, each of the crossings at the third exit station gate 230 could also be provided with components including a vehicle sensor door, an RFID card reader, a signal light, an electronic barrier and the like. If a departing transport vehicle passes the verification, the backend system sends an allow-in command to the third exit station gate 230 to lever up the electronic barrier allowing the vehicle to leave the container yard. If the departing transport vehicle fails to pass the verification, the backend system sends a denied command to the third exit station gate 230 to maintain the falling state of the electronic barrier 134 preventing the vehicle from leaving the container yard and activates an alarm to notify the security to escort the vehicle to the buffer zone 140 and waiting for further manual processing.

In the present embodiment, the entrance gate 100 and the exit gate 200 of the container terminal are designed as a three-station gate. Compared with the traditional one-stop gate, the traffic efficiency is improved and the probability of gate congestion is reduced, which plays a crucial role in enhancing the logistics operation efficiency.

The off-field transport vehicle passes the entrance gate 100 and drives to the container yard 300, and finally arrives at the corresponding sub yard in accordance with the position of the yard area obtained.

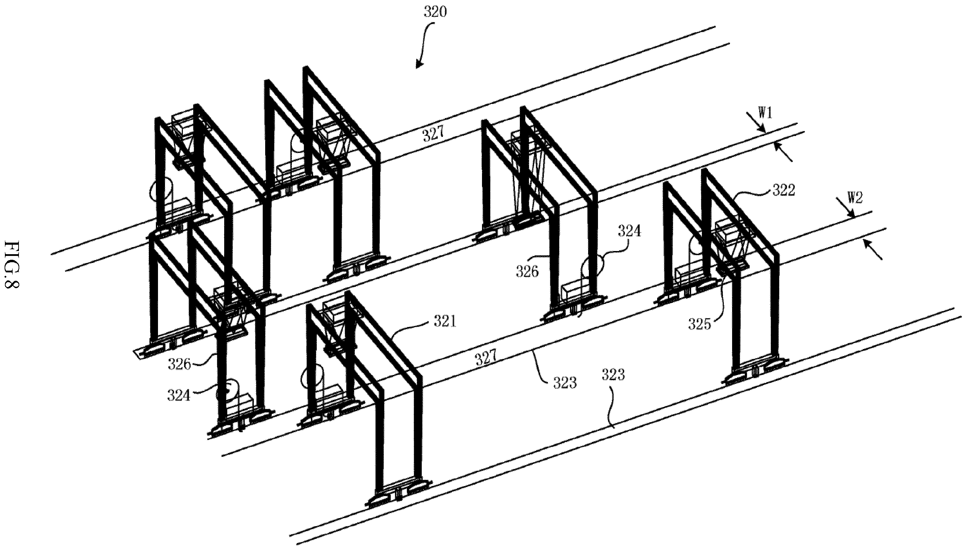

As shown in Fig.1, the container yard 300 of the present embodiment includes a plurality of sub yards 301 arranged in parallel with each other, and each of the sub yards 301 is perpendicular to a coastline 600. In the present embodiment, each of the sub yards 301 is divided into three areas and along an extending direction from the land side to the sea side includes: a land-side interaction area 310, a stacking operation area 320 and a sea-side interaction area 330 sequentially. Each sub yard 301 is provided with independently operated cranes 321 and 322, as shown in Fig. 8. The cranes 321 and 322 are crossed with the sub yard 301 in a width direction of the sub yard, and reciprocate along a length direction of the sub yard 301 (the direction perpendicular to the coastline 600), and carry out operations of picking up, storing, and stacking containers. In the present embodiment, it is designed that the entrance gate 100 and the exit gate 200 are located on the same side of the land-side interaction area 310, and are arranged separately from left to right. A carriageway 700 is laid among the land-side interaction area 310, the entrance gate 100 and the exit gate 200 for off-field transport vehicles to drive. After passing through the entrance gate 100, the off-field transport vehicle travels along the carriageway 700 and reaches the land-side interaction area 310 of the designated sub yard, and cooperates with the crane 321 of the sub yard to perform a container pick-up operation or a container storage operation. When the pick-up or storage operation is completed, the off-field transport vehicle travels along the carriageway 700 and arrives at the exit gate 200 and leaves the container terminal via the exit gate 200. The off-field transport vehicles only drive in the region where the entrance gate 100, the exit gate 200, and the land-side interaction area 310 are, which is far from an in-field transport vehicle operation area 400, so the off-field transport vehicles will not meet the in-field transport vehicles and problems such road congestion or forced interruption of operation process caused by crossing of off-field transport vehicle routes and in-field transport vehicles could be solved, which is beneficial to improve the overall operation efficiency of the terminal. The sea-side interaction area 330 and the land-side interaction area 310 of each sub yard 301 are designed to be placed at opposite ends of the stacking operation area 320. The sea-side interaction area 330 is adjacent to the in-field transport vehicle operation area 400 for the interaction of cranes 322 with in-field transport vehicles to collaborate on the loading and unloading of containers on board.

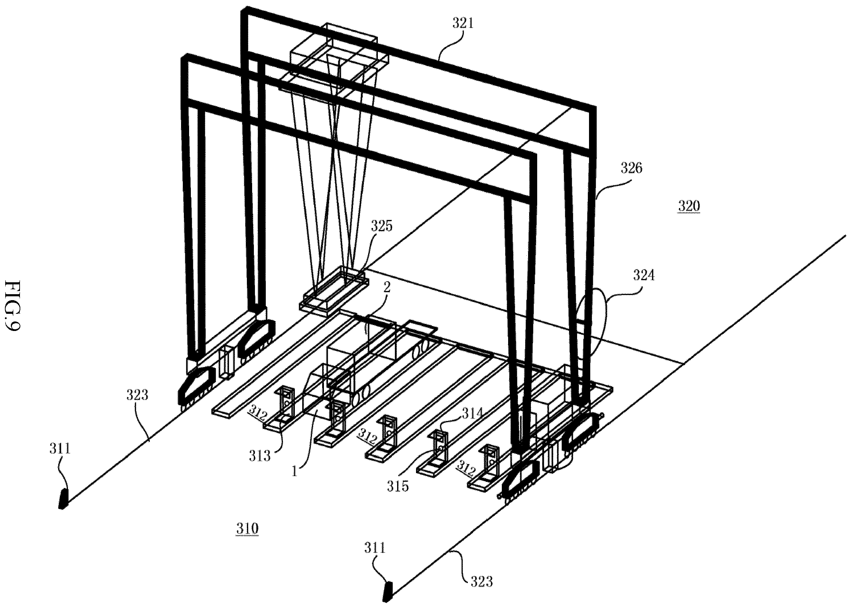

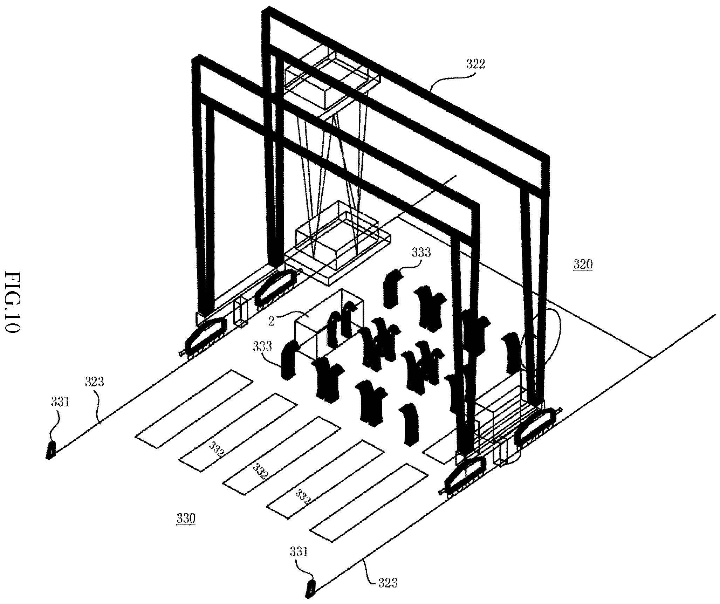

Preferably, in the present embodiment, two cranes 321 and 322 are provided in each sub yard 301, as shown in Fig. 8. The two cranes 321 and 322 move long a same track which extends from an outer end 311 of the land-side interaction area 310 to an outer end 331 of the sea-side interaction area 330. The outer end 311 indicates an end of the land-side interaction area 310 away from the stacking operation area 320 and the outer end 331 indicates an end of the sea-side interaction area 330 away from the stacking operation area 320, shown in Fig. 9 and Fig. 10; wherein the crane adjacent to the land-side interaction area 310 is defined as a land-side crane 321 and the crane adjacent to the sea-side interaction area 330 is defined as a sea-side crane 322. The land-side crane 321 works between the land-side interaction area 310 and the stacking operation area 320 and is used to cooperate with the off-field transport vehicles to perform the container pick-up and container storage operations. The sea-side crane 322 works between the sea-side interaction area 330 and the stacking operation area 320 and is used to cooperate with the in-field transport vehicles to perform loading and unloading operations on aboard.

When the land-side crane 321 fails, the land-side crane 321 can be docked at the outer end 311 of the land-side interaction area 310. At this time, the backend system could control the sea-side crane 322 to walk through the entire sub yard 301 and execute a full-field operation. When the sea-side crane 322 fails, the sea-side crane 322 can be docked at the outer end 331 of the sea-side interaction area 330. At this time, the backend system can control the land-side crane 321 to walk through the entire sub yard 301 and execute a full-field operation. The dual-crane arrangement could reliably guarantee the continuity of terminal operations, and the walking distance of each crane 321, 322 in the field can be reduced by half, which is conducive to improving operation efficiency.

The detailed construction of the land-side interaction area 310 and the operation of picking up and storing containers are explained in detail below with reference to Fig. 9.

In the present embodiment, one or more lane 312 for parking the off-field transport vehicles 1 is provided in the land-side interaction area 310 of each sub yard 301. A preferred example where five lanes 312 are provided is shown in Fig.9. An interactive pavilion 313 is provided on one side of each lane 312, which has a ceiling and is provided with a card reader 314, a display screen, and a start-stop button 315 inside. When the off-field transport vehicle 1 travels to a designated lane 312 of the designated sub yard in accordance with the yard area received when it passes through the entrance gate 100, the driver gets off and enters the interactive pavilion 313 to present the electronic license plate and approach it to the card reader 314. The card reader 314 reads an electronic license plate number from the electronic license plate and sends it to the backend system. When the backend system receives the electronic license plate number, it retrieves the information corresponding to the electronic license plate number, and then verifies whether the sub yard where the interactive pavilion 313 in is consistent with the location of the yard area corresponding to the electronic license plate number (each interactive pavilion 313 and the card reader 314 in the interactive pavilion 313 have a unique serial code); if the two are not consistent, it is considered that the off-field transport vehicle has not entered the correct yard area and the backend system sends an error message to the interaction pavilion 313 at this time. The error message is displayed on the display screen in interactive pavilion 313 to give a feedback to the driver reminding of the wrong destination. If the two are consistent, the backend system retrieves the task type and the stacking location of object container in the stacking operation area and sends it to the land-side crane 321. When receiving a container pick-up operation command, the land-side crane 321 lifts the object container from the stacking operation area 320 according to the received stacking location, moves to the boundary position between the stacking operation area 320 and the land-side interaction area 310 and waits a signal triggered by pressing a start-stop button 315. In order to ensure that the driver stays in the interactive pavilion 313 during the land-side crane 321 operation within the land-side interaction area 310 to avoid driver's safety risk, in the present embodiment, a start-stop button 315 without a holding function is preferably provided in the interactive pavilion 313. When the driver presses the start-stop button 315, the land-side crane 321 enters the land-side interaction area 310, hoists the lifted container to the off-field transport vehicle 1, and returns to the stacking operation area 320 to complete the container pick-up operation. If the land-side crane 321 receives a container storage task, the land-side crane 321 with an empty hoist 325 walks to the boundary of the stacking operation area 320 and the land-side interaction area 310 and waits for a signal triggered by pressing the start-stop button 315. When the driver presses the start-stop button 315, the land-side crane 321 enters the land-side interaction area 310, grabs the container 2 from the off-field transport vehicle 1, returns to the stacking operation area 320 and stores the object container at the designated stacking location to complete the container storage operation. During the operation of the land-side crane 321 within the land-side interaction area 310, if the start-stop button 315 is bounced up, it means that the driver may leave the interaction pavilion 313. At this time, in order to ensure the personal safety of the driver, the land-side crane 321 is designed to stop in place if the start-stop button 315 is bounced up to avoid hitting the driver by the hoist 325 or the lifted container 2.

The detailed construction of the sea-side interaction area 330 and the operation of loading on board and unloading from a ship are described in detail below with reference to Fig. 10.

In the present embodiment, one or more bracket interactive lane 332 is provided in the sea-side interaction area 330 of each sub yard 301. A preferred example where three interactive lanes 332 are provided is shown in Fig. 10. One or more group of brackets 333 for supporting a container is provided on each of the bracket interactive lanes 332. Shown in Fig. 10, each group consists of four brackets for supporting a 20-foot container. A 40-feet container or above could be placed on two groups of brackets 333.

When performing the operation process of loading on board (that is to transfer the containers stored in the container yard 300 to the ships at the dock), firstly an information collection device arranged in a crane operation area 500 gathers an identification code of a ship docked at a section of coastline corresponding to the crane operation area 500 and sends to the backend system to retrieve relevant information of the container to be transported by the ship which includes: a container yard area where the container stored (the serial number of the sub yard), the stacking location and the like, then determines the position of the brackets according to the relevant information retrieved which is sent to the sea-side crane 322 and an in-field transport vehicle corresponding to the sub yard. The sea-side crane 322 lifts the object container 2 to be loaded on board from the container yard 300 and places the object container 2 on the brackets 333 corresponding to the determined position of the brackets. As the in-field transport vehicle receiving the determined position of the brackets, the in-field transport vehicle automatically drives to the bracket interactive lane 332 corresponding to the determined position of the brackets and parks at the brackets 333 corresponding to the determined position of the brackets where the object container 2 on the brackets 333 is above the in-field transport vehicle. The in-field transport vehicle lifts a bearing platform thereon to hold the object container on the brackets 333 and drives away from the sea-side interaction area 330.

The in-field transport vehicle carrying the object container to be loaded on board drives to an in-field transport vehicle operation area 400. As shown in Fig.1, a positioning device 401 for locating the in-field transport vehicle is provided in the in-field transport vehicle operation area 400. In the present embodiment, the positioning device 401 comprises one or more magnetic nails provided on the ground of the in-field transport vehicle operation area 400. Magnetic nails are distributed in a matrix on the ground of the in-field transport vehicle operation area 400, wherein each magnetic nail has an independent serial number. In the present embodiment, a horizontal automatic guided vehicle is used as the in-field transport vehicle, and a radar scanning board is arranged thereon. While the horizontal automatic guided vehicle runs in the in-field transport vehicle operation area 400, the magnetic nails 401 on the ground are scanned by the radar scanning board to obtain the serial number of each magnetic nail 401 which is sent to the backend system for the calculation of the physical position of the horizontal automatic guided vehicle. The backend system automatically generates a driving route according to the physical position of the horizontal automatic guided vehicle and the docking position of the ship and sends the driving route to the horizontal automatic guided vehicle, thereby navigating the operation of the horizontal automatic guided vehicle.

The horizontal automatic guided vehicle transports the object container to be loaded on board to the boundary of the in-field transport vehicle operation area 400 and the crane operation area 500, and the object container on the horizontal automatic guided vehicle is loaded into the ship by the crane to complete the loading operation.

In the present embodiment a plurality of cranes 501 are sequentially arranged in the crane operation area 500 along the direction of the coastline 600. As shown in Fig. 1, each crane 501 corresponds to a unique crane code. When the ship needs to be docked at the container terminal, the backend system automatically arranges a docking position for the ship, the docking position corresponds to the crane code, and the crane code and the ship identification code are associated and the associated information is stored in the information list of the backend system. When the backend system executes the loading operation process, the destination of the horizontal automatic guided vehicle is determined according to the crane code corresponding to the ship, and then the horizontal automatic guided vehicle drives to the destination where the crane corresponding to the crane code is. The storage position of the object container in the ship is sent to the crane 501 and the crane 501 could complete the loading operation automatically.

Similarly, when performing the operation process of unloading (that is to transfer the containers from the ship to the container yard 300), the backend system retrieves information including a crane serial number, a container yard area where the container to be stored (the serial number of the sub yard), the stacking location and the like according to an identification code of the ship and generates a ship unloading task and a storage position of the object container on the ship which are sent to the crane 501 corresponding to the crane serial number to enable the crane 501 to pick up the object container from the ship and place the object container on a horizontal automatic guided vehicle. Then the backend system generates a driving route according the crane serial number and the container yard area where the object container to be stored and controls the horizontal automatic guided vehicle to transfer the object container to the sea-side interaction area 330 corresponding to the destination container yard area and place the object container to designated brackets 333. The backend system sends the bracket position and the stacking location to the sea-side crane 322 corresponding to the stacking location. The sea-side crane 322 picks up the object container from the brackets 333 and places the object container at the stacking location to complete the unloading operation.

When designing the container yard 300, it is considered that a winding machine 324 for driving the hoist 325 to rise and fall is installed on each of the cranes 321 and 322, as shown in Fig. 8. The winding machine 324 is typically installed on one side of the main frame 326 of the cranes 321 and 322, and protrudes outside the main frame 326 with a protruding height of *d.* The *d* is proximately 2m. For a typical container yard 300, the winding machine 324 on the cranes in each sub yard is located on the same side of the main frame 326, and a maintenance lane with a width greater than *d* is formed between two adjacent sub yards. The width of the maintenance lane should be at least slightly larger than the width of a conventional single lane, for example, *d =* 5m, allowing the maintenance vehicle to pass through. The arrangement of the maintenance lane could facilitate the maintenance operation by the maintenance vehicle when the crane fails. But this conventional design enlarges the occupied floor space of a container yard, which is not suitable to small container yard construction.

In order to solve the above problem, the present embodiment separates sub yards into groups by means of any two sub yards adjacent to each other consisting of one group, wherein the distance *W1* between the two sub yards in each group is smaller than the width of a single lane, for example, *W1* = 2 ∼ 3 m. A traffic lane 327 with a width W2 of greater than *2d* is formed between two adjacent groups, for example, *W2* = 5 ∼ 6 m, allowing a maintenance vehicle to drive through. In each sub yard, a winding machine 324 is installed on one side of a main frame 326 of the crane 321 which is close to a traffic lane 327 adjacent to, and a winding machine 324 is also installed on one side of a main frame 326 of the crane 322 which is close to a traffic lane 327 adjacent to. That is to say for cranes in two sub yards of one group, no winding machine is arranged on the side adjacent to each other, and all of winding machines are provided on the other side opposite to each other. With this arrangement, the distance *W1* between the two sub yards could be minimized. The winding machine 324 of the two adjacent sub yards face each other directly leaving a traffic lane 327 with a width W2 greater than *2d* allowing two cranes to drive simultaneously. The design width *W2* is larger than the width of a regular single lane to allow a maintenance vehicle to drive. For the two sub yards located at an outermost side of the container yard 300, the winding machine 324 on the cranes 321 and 322 could be installed on the side of the main frame 326 facing the periphery of the container yard 300, thereby reducing the floor area of the container yard 300 and beneficial to the layout design of the container yard.

While the invention has been specifically described in connection with certain specific embodiments thereof, it is to be understood that this is by way of illustration and not of limitation. Reasonable variation and modification are possible within the scope of the forgoing disclosure and drawings without departing from the spirit of the invention which is defined in the appended claims.

## Claims

1. An automated container handling dock, **characterized in that**, along a direction from a land side to a sea side, is provided sequentially:
terminal gates which include an entrance gate configured to verify the legitimacy of an off-field transport vehicle and container thereon and provide a driver of the off-field transport vehicle with a destination container yard area to which the off-field transport vehicle needs to drive, and an exit gate configured to verify the legitimacy of a departing transport vehicle and container thereon and allow the departing transport vehicle to leave or prohibit the departing transport vehicle from leaving according to a verification result;
a container yard which includes a plurality of sub yards arranged parallel to each other, wherein each sub yard is arranged perpendicular to a coastline and includes three areas: a land-side interaction area, a stacking operation area and a sea-side interaction area from the land side to the sea side; a crane independently operated is provided in each sub yard, which is configured to interact with the off-field transport vehicle entering into the container yard at the land-side interaction area for automatically performing a container pick-up operation or a container storage operation according to a stacking location of an object container that requires to be transferred by the off-field transport vehicle, to automatically stack the object container at the stacking operation area, and to interact with an in-field transport vehicle at the sea-side interaction area for automatically performing a load operation on board or an unload operation from a ship according to a stacking location of an object container that requires to be loaded on board or unloaded from a ship;
an in-field transport vehicle operation area which is provided with a positioning device configured to locate an in-field transport vehicle which receives a driving route generated by a backend system according to a docking position of a ship to be loaded or unloaded and a stacking location of an object container that requires to be loaded on board or unloaded from a ship; and
a crane operation area in which a plurality of cranes are sequentially arranged along a direction of a coastline which are configured to lift and place a container transferred by an in-field transport vehicle in a ship in a load operation or lift a container from a ship and place the lifted container to an in-field transport vehicle.

2. An automated container handling dock according to claim 1, **characterized in that**:
in the land-side interaction area is provided with one or more lanes for parking off-field transport vehicles, wherein an interactive pavilion is provided on one side of each lane; the interactive pavilion is provided with a card reader configured to read an electronic license plate number from an electronic license plate presented by a driver of an off-field transport vehicle and send the electronic license plate number to the backend system to retrieve a container stacking location corresponding to the electronic license plate number; the container stacking location is sent to a crane in a sub yard to enable the crane to perform a container pick-up operation or a container storage operation;
in the sea-side interaction area is provided with one or more bracket interactive lanes for supporting a container; when the backend system performs a loading operation process, a bracket location is sent to a crane and an in-field transport vehicle to instruct the crane to lift a object container to be loaded and place the object container to brackets corresponding to the bracket location and to instruct the in-field transport vehicle to pick up the object container at the bracket location to perform a load operation on board; when the backend system performs an unloading operation from a ship, a bracket location is sent to crane and an in-field transport vehicle to instruct the in-field transport vehicle to place a object container unloaded from a ship at brackets corresponding to the bracket location and instruct the crane to lift the object container from the brackets to perform an unloading operation from a ship.

3. An automated container handling dock according to claim 2, **characterized in that**:
in each sub yard is provided with two cranes capable of moving and reciprocating along a direction perpendicular to the coastline: a land-side crane close to the land-side interaction area and a sea-side crane close to the sea-side interaction area; wherein the land-side crane works between the land-side interaction area and the stacking operation area and is configured to cooperate with off-field transport vehicles to perform a container pick-up operation or a container storage operation, and the sea-side crane works between the sea-side interaction area and the stacking operation area and is configured to cooperate with in-field transport vehicles to perform a loading operation on board or an unloading operation from a ship.

4. An automated container handling dock according to claim 3, **characterized in that**:
the land-side crane and the sea-side crane moves along a same track extending from an outer end of the land-side interaction area to an outer end of the sea-side interaction area, wherein the outer end of the land-side interaction area is an end of the land-side interaction area away from the stacking operation area and the outer end of the sea-side interaction area is an end of the sea-side interaction area away from the stacking operation area; when the land-side crane fails, the land-side crane is docked at the outer end of the land-side interaction area and the sea-side crane is controlled by the backend system to move through a sub yard to perform a full-field operation; when the sea-side crane fails, the sea-side crane is docked at the outer end of the sea-side interaction area and the land-side crane is controlled by the backend system to move through a sub yard to perform a full-field operation.

5. An automated container handling dock according to claim 3, **characterized in that**:
inside the interactive pavilion is provided with a start-stop button without a holding function; when the start-stop button being pressed, the land-side crane first enters into the land-side interaction area from the stacking operation area to pick up an container from an off-field transport vehicle or place an container picked up from the stacking operation area on an off-field transport vehicle and then returns to the stacking operation area; during an interaction operation of the land-side crane at the land-side interaction area, if the start-stop button is bounced up, the land-side crane stops in place.

6. An automated container handling dock according to claim 5, **characterized in that**:
as receiving the electronic license plate number loaded by a card reader in an interactive pavilion, the backend system first verifies whether a sub yard where the interactive pavilion is located is same as a sub yard corresponding to the electronic license plate number received; if the sub yards are not consistent, the backend system sends an error message to the interactive pavilion giving a feedback to the driver of the off-field transport vehicle by displaying the error message on a screen in the interactive pavilion; if the sub yards are consistent, the backend system retrieves the type of an operation and the stacking location of the object container in the stacking operation area which are sent to the land-side crane; if the land-side crane receives a container pick-up operation task, the land-side crane picks up the object container from the stacking operation area according to the stacking location and moves to a boundary area between the land-side interaction area and the stacking operation area to wait for the start-stop button being pressed; once the start-stop button being pressed, the land-side crane enters into the land-side interaction area and places the pick-up object container on the off-field transport vehicle to complete a container pick-up operation; if the land-side crane receives a container storage operation task, the land-side crane moves to the boundary area between land-side interaction area and the stacking operation area with an empty hoist to wait for the start-stop button being pressed; once the start-stop button being pressed, the land-side crane first enters into the land-side interaction area and picks up the object container from the off-field transport vehicle, and then returns to the stacking operation area and places the object container at the stacking location in the stacking operation area to complete a container storage operation.

7. An automated container handling dock according to claim 3, **characterized in that**:
when the backend system performing a loading operation on board, the backend system is required firstly to send the stacking location of the object container to be loaded on board in the stacking operation area and a bracket location where the object container to be placed in the sea-side interaction area to the sea-side crane; if the sea-side crane receives a loading operation task, the sea-side crane picks up the object container from the stacking operation area according to the stacking location and moves to the sea-side interaction area and places the object container on the brackets corresponding to the bracket location; the backend system then sends the bracket location and a dock position of a ship to an in-field transport vehicle and instruct the in-field transport vehicle to pick up the object container at the bracket location and transfer the object container to a crane corresponding to the dock position of the ship, the crane corresponding to the dock position of the ship performs loading;
when the backend system performing an unloading operation from a ship, the backend system is required firstly to send a dock position of a ship to be unloaded and a bracket location where the unloaded object container to be placed in the sea-side interaction area to an in-field transport vehicle and instruct the in-field transport vehicle to transfer the object container unloaded by a crane to brackets corresponding to the bracket location; the backend system then sends the bracket location and a stacking location of the object container in the stacking operation area to the sea-side crane; when the sea-side crane receiving an unload operation task, the sea-side crane moves to the bracket location in the sea-side interaction area with an empty hoist and picks up the object container on the brackets and transfer the object container to the stacking operation area and places the object container on the stack location to complete an unloading operation.

8. An automated container handling dock according to claim 7, **characterized in that**:
a charging sliding contact line is provided on the brackets and a charging trolley is arranged on the in-field transport vehicle; wherein the charging trolley is provided with a charging carbon brush; when the in-field transport vehicle enters into the sea-side interaction area, the charging carbon brush is controlled to extend out and contact with the charging sliding contact line to charge the in-field transport vehicle.

9. An automated container handling dock according to any one from claim 1 to claim 8, **characterized in that**:
a winding machine configured to lift or lower the hoist is installed on one side of a main frame of each crane protruding outside from the main frame with a protruding height of d; any two sub yards adjacent to each other consisting of one group, wherein the distance between the two sub yards in each group is smaller than the width of a single lane and a traffic lane with a width greater than 2d is formed between two adjacent groups allowing a maintenance vehicle to drive through; the winding machine is installed on one side of a main frame of the crane close to the traffic lane; for the two sub yards located at an outermost side of the container yard, the winding machines are installed on the side of the main frames of the cranes facing the periphery of the container yard.

10. An automated container handling dock according to any one from claim 1 to claim 8, **characterized in that**:
the positioning device comprises one or more magnetic nails distributed on the ground of the in-field transport vehicle operation area; wherein each magnetic nail has an independent serial number and the in-field transport vehicle is a horizontal automatic guided vehicle on which a radar scanning board is arranged; while the horizontal automatic guided vehicle runs in the in-field transport vehicle operation area, the magnetic nails on the ground are scanned by the radar scanning board to obtain the serial number of each magnetic nail which is sent to the backend system for the calculation of the physical position of the horizontal automatic guided vehicle, and a driving route of the horizontal automatic guided vehicle is generated to navigate the operation of the horizontal automatic guided vehicle.
